# DEMANDE DE BREVET EUROPEEN

(11) **EP 0 596 560 A1**
(43) Date de publication de la demande: **11.05.1994**
(21) Numéro de dépôt: 93203009.1
(22) Date de dépôt: 28.10.1993
(51) Int. Cl.: G01S 15/89, G06F 15/68

(54) **Appareil d'examen de milieux par echographie ultrasonore**

(30) Priorité: 04.11.1992 FR 9213241
(71) Demandeur: LABORATOIRES D'ELECTRONIQUE PHILIPS, 94450 Limeil-Brévannes (FR); Philips Electronics N.V., 5621 BA Eindhoven (NL)
(72) Inventeur: Collet-Billon, Antoine, F-75008 Paris (FR)
(74) Mandataire: Landousy, Christian

(57) **Abrégé**

Appareil d'examen de milieux par échographie ultrasonore à l'aide d'un réseau de m transducteurs ultrasonores associé à un étage d'émission vers le milieu à explorer et à un étage de réception des signaux échographiques renvoyés vers le réseau par les obstacles rencontrés, ledit étage de réception comprenant n voies de réception et traitement, un additionneur des sorties des voies, un détecteur d'enveloppe, et un sous-ensemble de traitement et de visualisation, et le détecteur d'enveloppe comprenant notamment un circuit (50) de structuration de signal temporel par filtrage morphologique unidimensionnel dit de fermeture, composé lui-même d'un circuit de dilatation (51) et d'un circuit d'érosion (52). Dans une variante perfectionnée, il comprend également un soustracteur, recevant sur ses entrées positive et négative respectivement la sortie directe du circuit d'érosion (52), et la sortie du circuit de dilatation (51) par l'intermédiaire d'un atténuateur.

Application : échographes ultrasonores utilisés en médecine et en contrôle non destructif de matériaux.

## Description

La présente invention concerne un appareil d'examen de milieux par échographie ultrasonore à l'aide d'un réseau de m transducteurs ultrasonores associé à un étage d'émission de signaux ultrasonores vers le milieu à explorer et à un étage de réception et traitement des signaux échographiques renvoyés vers ledit réseau par les obstacles rencontrés dans ce milieu, ledit étage de réception et traitement comprenant essentiellement n voies de réception et traitement, un additionneur des sorties desdites n voies, un détecteur d'enveloppe, et un sous-ensemble de traitement et de visualisation.

Un tel appareil est utilisable notamment dans le domaine médical, ou bien pour le contrôle non destructif de matériaux, sans que de telles applications constituent bien entendu une limitation de l'invention.

On sait qu'en échographie, la détection d'enveloppe permet d'obtenir, à partir du signal modulé présent en sortie de la ou des voies de réception et traitement, le signal de réflectivité spécifique du milieu exploré et dont la cartographie, en niveaux de gris par exemple, constitue l'image échographique. La solution le plus couramment utilisée à l'heure actuelle pour effectuer cette opération de détection consiste à déterminer le module du signal analytique associé à ce signal modulé, par un redressement suivi d'un filtrage passe-bas. Il faut cependant reconnaître que ce filtrage introduit un certain lissage qui modifie suffisamment le signal utile en cours de traitement pour détériorer la finesse d'analyse dans le milieu exploré et s'avérer par conséquent indésirable du point de vue de la qualité d'image.

Le but de l'invention est de proposer un échographe dans lequel la détection d'enveloppe repose sur une autre technique éliminant l'inconvénient mentionné ci-dessus, c'est-à-dire ne modifiant pas la nature du signal utile, ou le moins possible.

A cet effet, l'invention concerne un appareil tel que défini dans le préambule de la description et qui est en outre caractérisé en ce que le détecteur d'enveloppe comprend un redresseur suivi d'un circuit de structuration de signal temporel par filtrage morphologique unidimensionnel dit de fermeture, ce circuit comprenant lui-même en série un circuit de dilatation et un circuit d'érosion.

Cette solution technique permet d'obtenir un signal d'enveloppe dont est désormais absent tout effet de lissage, ce signal n'étant, d'une manière générale, pratiquement pas altéré si la taille de l'élément structurant est judicieusement choisie par rapport à la fréquence centrale du réseau de transducteurs.

La demande de brevet européen EP 0345852 décrit un échographe dont l'étage de réception et de traitement comprend un filtre morphologique réalisé à l'aide de moyens de dilatation et d'érosion. Il faut cependant noter qu'il s'agit d'un filtre agissant après démodulation, sur le signal à visualiser, et non sur le signal modulé qui doit subir préalablement l'opération de détection d'enveloppe. Par ailleurs, ce filtre en échelle de gris est un filtre bidimensionnel, agissant sur un signal spatial, sur une forme soumise à une représentation en deux dimensions et non sur un signal temporel. Un signal échographique reste en effet, au sortir de la détection d'enveloppe, affecté de fluctuations dues au "speckle", ou bruit d'interférence à large bande, qui détériore la qualité des images échographiques et empêche par exemple la détection de lésions tissulaires à faible contraste, et le filtre proposé dans ce document réduit ce bruit spatial de l'image restituée.

Dans le cas de la présente invention, la solution technique retenue, mise en oeuvre plus en amont de la précédente, a pour rôle non plus l'amélioration de la qualité d'une image affectée de bruit, mais d'une restitution fidèle du signal échographique, et cet objectif est effectivement atteint puisque, pour une réalisation aussi simple que celle d'un filtre passe-bas traditionnel, la structure proposée lisse nettement moins le signal-enveloppe, en conserve plus fidèlement les variations (pics ou vallées) correspondant aux différents obstacles rencontrés par le faisceau ultrasonore émis.

Les particularités de l'invention apparaîtront maintenant de façon plus précise dans la description qui suit et dans les dessins annexés, donnés à titre d'exemples non limitatifs et dans lesquels :
- la figure 1 montre de façon très schématique un exemple d'échographe du commerce, incorporant notamment dans son étage de réception un détecteur d'enveloppe de type classique ;
- les figures 2 et 3 montrent deux exemples de réalisation d'un détecteur d'enveloppe conforme à l'invention, et les figure 4 et 5 deux exemples d'éléments structurants donnant des résultats satisfaisants.

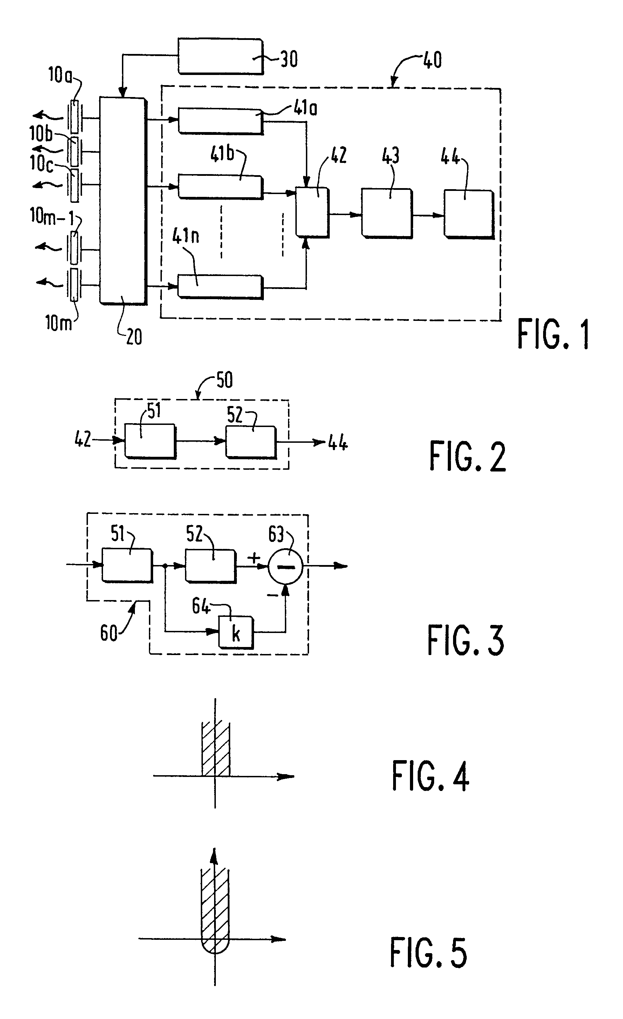

Comme le montre la figure 1, un échographe ultrasonore de structure classique comprend tout d'abord un réseau de m transducteurs ultrasonores 10a à 10m destinés à émettre et à recevoir des signaux ultrasonores, ainsi qu'un aiguilleur analogique 20 pour la séparation des étages d'émission et de réception. Ce réseau de transducteurs est ici linéaire, mais il ne s'agit là que d'un exemple de réalisation non limitatif (le réseau de transducteurs pouvant être bidimensionnel, ou bien d'un autre type de structure). L'émission ultrasonore est effectuée par tirs périodiques vers le milieu à explorer (non représenté), les signaux émis ayant été en général préalablement focalisés, électroniquement, en excitant les transducteurs selon une loi temporelle déterminée. Cette émission est réalisée à l'aide d'un étage d'émission 30, comprenant essentiellement, sans que ces éléments, bien connus, soient davantage décrits, un circuit de commande définissant la cadence des tirs ultrasonores à une fréquence de récurrence déterminée, un circuit d'émission des signaux électriques d'excitation des transducteurs, un circuit de focalisation électronique, et un circuit d'activation de la haute tension, pour l'exécution de l'émission par les transducteurs.

La réception des signaux échographiques renvoyés vers les transducteurs par les obstacles rencontrés dans le milieu exploré est assurée par un étage 40 de réception et traitement, composé de n voies de réception et traitement 41 a à 41 n comprenant elles-mêmes, chacune, les éléments essentiels suivants, à savoir un préamplificateur, un compensateur de gain en fonction du temps, une ligne à retard pour la focalisation, commandée par un séquenceur qui définit pour chaque voie le retard spécifique permettant la focalisation à la réception. Ces éléments, connus, ne sont pas représentés en détail. Un additionneur 42 reçoit les sorties des n voies de réception et traitement ainsi constituées, et est suivi d'un détecteur d'enveloppe 43, puis de circuits connus tels que : amplificateur de compression logarithmique, circuit de mémorisation et de conversion de balayage, dispositif de visualisation avec éventuel codage de couleur,... permettant l'obtention d'images de plans de coupe des milieux explorés. L'ensemble de ces circuits connus (amplificateur, etc...) est regroupé, par commodité et par souci de simplification de la figure 1, sous le terme de sous-ensemble de traitement et de visualisation et désigné par la référence 44.

Comme on l'a vu plus haut, le détecteur d'enveloppe 43 est formé d'un redresseur et d'un filtre passe-bas. Selon l'invention, il est prévu une nouvelle structure de détecteur d'enveloppe, dans lequel un redresseur est toujours prévu, mais suivi, comme le montre la figure 2, d'un circuit 50 de filtrage morphologique unidimensionnel dit de fermeture, comprenant un circuit de dilatation 51 suivi d'un circuit d'érosion 52.

L'article "Image analysis using mathematical morphology", de R.M. Haralick, S.R. Sternberg et X. Zhuang, paru dans IEEE Transactions on Pattern Analysis and Machine Intelligence, Vol. PAMI-9, no4, juillet 1987, pages 532-550 présente de façon détaillée ce qu'est la morphologie mathématique et comment elle permet notamment de quantifier des structures, des formes d'image à l'aide de relations entre l'image et un petit élément, dit élément structurant, que l'on déplace par rapport à celle-ci. Ces relations proviennent d'opérations morphologiques élémentaires dites respectivement érosion et dilatation qui donnent en quelque sorte des images structurées par défaut (érosion) et par excès (dilatation). Ces opérations élémentaires peuvent être combinées pour donner des opérations dites de fermeture (dilatation suivie d'une érosion) et d'ouverture (érosion suivie d'une dilatation) qui restituent des images elles aussi plus structurées mais de dimensions plus voisines de celles de l'image initiale.

Dans le cas présent, en affectant un tel filtre non pas au traitement spatial bidimensionnel de l'image restituée, mais à la structuration d'un signal temporel, le signal à démoduler, la fermeture morphologique altère peu la forme du signal si la taille de l'élément structurant est adaptée à la résolution axiale de la structure transductrice ultrasonore : on entend par là qu'il est avantageux que la taille de l'élément structurant soit de l'ordre d'une à une fois et demie la longueur d'onde associée à la fréquence de fonctionnement du réseau de transducteurs. Des valeurs trop faibles conduisent à une détection d'enveloppe qui est moins efficace, et des valeurs trop élevées à un filtrage trop appuyé qui nuit à ladite résolution (en obstruant trop les "vallées" du signal sur lequel s'exerce le filtrage morphologique). Un élément structurant plan (tel que celui représenté sur la figure 4) a tendance à engendrer la présence d'assez larges paliers dans le signal résultant, tandis qu'un élément structurant sphérique (voir la figure 5) permet d'atténuer de telles discontinuités de dérivée. Dans la mise en oeuvre de l'invention, on choisit de préférence de disposer d'une possibilité de réglage de la taille de l'élément structurant, ce qui permet de s'adapter à la fois à la fréquence de la structure transductrice et au type de signal modulé dont on veut détecter l'enveloppe.

Bien entendu, l'invention n'est pas limitée à ces réalisations, à partir desquelles des variantes sont possibles. En particulier, on peut proposer, comme le montre la figure 3, un circuit de filtrage modifié 60, comprenant non seulement, en série, le circuit de dilatation 51 et le circuit d'érosion 52, mais aussi un soustracteur 63 qui permet de retrancher du signal résultant de la fermeture (disponible en sortie du circuit 52) une fraction du signal dilaté (disponible en sortie du circuit 51). A cet effet, un atténuateur 64 opérant une multiplication par k, avec k inférieur à 1, est placé entre la sortie du circuit 51 et l'entrée négative du soustracteur 63. On obtient ainsi, sur l'image finale, un effet de renforcement de contour tout à fait bénéfique.

## Revendications

1. Appareil d'examen de milieux par échographie ultrasonore à l'aide d'un réseau de m transducteurs ultrasonores associé à un étage d'émission de signaux ultrasonores vers le milieu à explorer et à un étage de réception et traitement des signaux échographiques renvoyés vers ledit réseau par les obstacles rencontrés dans ce milieu, ledit étage de réception et traitement comprenant essentiellement n voies de réception et traitement, un additionneur des sorties desdites n voies, un détecteur d'enveloppe, et un sous-ensemble de traitement et de visualisation, caractérisé en ce que le détecteur d'enveloppe comprend un redresseur suivi d'un circuit de structuration de signal temporel par filtrage morphologique unidimensionnel dit de fermeture, comprenant lui-même en série un circuit de dilatation et un circuit d'érosion.

2. Appareil selon la revendication 1, caractérisé en ce que l'élément structurant dudit filtrage par fermeture est plat.

3. Appareil selon la revendication 1, caractérisé en ce que l'élément structurant dudit filtrage par fermeture est sphérique.

4. Appareil selon l'une des revendications 2 et 3, caractérisé en ce que le détecteur d'enveloppe comprend également un soustracteur, recevant d'une part sur son entrée positive, la sortie du circuit d'érosion, et d'autre part, sur son entrée négative, la sortie du circuit de dilatation par l'intermédiaire d'un atténuateur.

5. Appareil selon l'une des revendications 1 à 4, caractérisé en ce que la taille de l'élément structurant dudit filtrage par fermeture est réglable.
